(19) **Europäisches Patentamt / European Patent Office / Office européen des brevets**

(11) **EP 4 610 721 A1**

(12) **EUROPEAN PATENT APPLICATION**

(43) Date of publication:
03.09.2025 Bulletin 2025/36

(21) Application number: 24173411.0

(22) Date of filing: 30.04.2024

(51) International Patent Classification (IPC):
$G02F\ 1/35\ ^{(2006.01)}$  $G02F\ 1/365\ ^{(2006.01)}$
$H01S\ 3/00\ ^{(2006.01)}$  $H01S\ 3/067\ ^{(2006.01)}$
$H01S\ 3/16\ ^{(2006.01)}$

(52) Cooperative Patent Classification (CPC):
G02F 1/365; G02F 1/3528; H01S 3/0057;
H01S 3/0078; H01S 3/0092; H01S 3/06725;
H01S 3/06754; H01S 3/1618; G02F 2202/32

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.02.2024 EP 24461538

(71) Applicant: Fluence sp. z o.o.
01-217 Warszawa (PL)

(72) Inventors:
• KRUPA, Katarzyna
05-070 Sulejowek (PL)
• KARDAS, Tomasz Michal
02-443 Warszawa (PL)
• STEPANENKO, Yuriy
01-494 Warszawa (PL)

(74) Representative: AOMB Polska Sp. z.o.o.
ul. Rondo Ignacego Daszynskiego 1
00-843 Warsaw (PL)

(54) **SYSTEM AND METHOD FOR SPECTRAL BROADENING OF CHIRPED LASER PULSES**

(57) The subject matter of the invention is a system for spectral broadening of chirped laser pulses characterized in that the system comprises a fiber-based source (1), a fiber-based spectral filter (2) and a fiber-based amplifier (3), wherein said fiber-based components (1, 2, 3) of the system are optically connected by optical fibers (4). The invention also relates to a method for spectral broadening of chirped laser pulses characterized in that it is conducted in the system according to the invention, wherein the chirped laser pulses are created in a fiber-based source (1), then the chirped laser pulses are shortened down to a duration below 1,5 ps in the fiber-based spectral filter (2) and next the filtered chirped laser pulses are amplified and spectrally broadened in the fiber-based amplifier (3) via nonlinear effects.

**Fig. 1**

EP 4 610 721 A1

## Description

## Technical field

The subject matter of the present invention is a system for spectral broadening of chirped laser pulses and a method for spectral broadening of chirped laser pulses utilizing the system according to the invention. This invention relates to the field of nonlinear fiber optics and laser technologies.

## Background art

Supercontinuum generation (SCG) is a phenomenon in which relatively narrow-band incident laser pulses undergo an extreme nonlinear spectral broadening to provide a broadband spectrally continuous output light. Supercontinuum (SC) light sources have found numerous applications in various fields ranging from spectroscopy, metrology, remote sensing to biomedical imaging [Labruyère, A. Tonello, V. Couderc, G. Huss, and P. Leproux, "Compact supercontinuum sources and their biomedical applications," Opt. Fiber Technol. 18, 375-378 (2012); C. Poudel and C. F. Kaminski, "Supercontinuum radiation in fluorescence microscopy and biomedical imaging applications," J. Opt. Soc. Am. B 36, A139-153 (2019)]. Depending on the pump pulse duration and dispersion regime of beam propagation, SCG can involve one or a combination of different nonlinear effects. During the last several decades SCG has been widely studied especially since the advent of photonic crystal fibers (PCFs) that allow controlling the dispersion properties of these waveguides [J. M. Dudley, G. Genty, S. Coen, "Supercontinuum generation on photonic crystal fiber", Rev. of Modern Physics 78, 1135-1184, (2006)]. SCG is now quite well understood and supercontinuum fiber light sources are commercially available.

SCG obtained with photonic crystal fiber (PCF) in a normal dispersion regime has recently attracted strong research interest due to its ability to generate a broadband coherent light with a noise level much lower than typical SC sources using anomalous dispersion [T. Sylvestre et al. "Recent advances in supercontinuum generation in specialty optical fibers", JOSAB 38, F90-F103 (2021)]. In an anomalous dispersion regime, the coherence is spoiled by such effects as, for instance, high order soliton generation and soliton fission, modulation instability (MI), or rogue wave generation which are involved in SCG [J. M. Dudley, G. Genty, S. Coen, "Supercontinuum generation on photonic crystal fiber", Rev. of Modern Physics 78, 1135-1184, (2006)]. In a normal dispersion regime, on the other hand, SCG is mostly based on nonlinear coherent effects such as self-phase modulation (SPM) followed by optical wave breaking (OWB), which has a high degree of coherence and pulse-to-pulse stability [C. Finot, B. Kibler, L. Provost, and S. Wabnitz, "Beneficial impact of wave-breaking for coherent continuum formation in normally dispersive nonlinear fibers", J. Opt. Soc. Am. B 25, 1938 (2008); A. M. Heidt, J. S. Feehan, J. H. V. Price, and T. Feurer, "Limits of coherent supercontinuum generation in normal dispersion fibers", J. Opt. Soc. Am. B 34, 764 (2017)]. In the latter case, in order to efficiently generate broadband light, the use of pulses with a duration below 1,5 ps is required [E. Genier, S. Grelet, R. D. Engelsholm, P. Bowen, P. M. Moselund, O. Bang, J. M. Dudley, and T. Sylvestre, "Ultra-flat, low-noise, and linearly polarized fiber supercontinuum source covering 670-1390 nm", Opt. Lett. 46, 1820-1823 (2021); H-Y Chung, W. Liu, Q. Cao, L. Song, F. X. Kartner, and G. Chang, "Megawatt peak power tunable femtosecond source based on self-phase modulation enable spectral selection", Opt. Express 26, 3684 (2018)]. However, ultrafast fiber lasers operating in dissipative soliton regime deliver pulses that are chirped typically to the temporal duration above 1,5 ps. The presence of significant energy excludes the possibility of compressing those chirped pulses with the specially designed microstructured anomalous dispersion fibers. In these fibers the broadening of the pulse spectrum starts before the pulse becomes compressed. The use of specially designed fiber Bragg gratings does not seem feasible as well since with the current technology, the chirp introduced by such gratings is very big. Thus such a big amount would have to be compensated with very long pieces of fiber with opposite dispersion. Thus, to obtain the pulse below 1,5 ps down to the femtosecond regime, one needs to use a pulse compressor, which is based on free-space diffraction optics, further followed by using free-space optics to reinject the pump to the fiber serving for spectral broadening. Using the free space part is a solution that is sensitive to temperature variations, mechanical vibrations, dusty environment, and moreover requires recurrent re-alignment. Whereas all-fiber systems and especially those based on polarization maintaining (PM) fibers and fiber components are not prone to those environmental changes. They are compact, environmentally insensitive, and alignment-free, thus well-adapted to work outside the laboratory [W. Hänsel, H. Hoogland, M. Giunta, S. Schmid, T. Steinmetz, R. Doubek, P. Mayer, S. Dobner, C. Cleff, M. Fischer, and R. Holzwarth. "All polarization-maintaining fiber laser architecture for robust femtosecond pulse generation". Applied Physics B, 123,11.2016; X. Shen, W. Li, and H. Zeng. Polarized dissipative solitons in all-polarization-maintained fiber laser with long-term stable self-started mode-locking. Applied Physics Letters, 105: 101109-101109, 09 2014].

It has been experimentally demonstrated that it is possible to obtain high power femtosecond pulses from a gain-switch diode (GSD) at 1 $\mu$m, namely 140fs pulses with peak power up to 13MW [W. Fu, L. G. Wright, and F. W. Wise, "High-power femtosecond pulses without a modelocked laser", Optica 4, 831-834 (2017)]. In this work, a multistage system was used: first a so-called Mamyshev regenerator shortened the initial 10 ps pulses from GSD while improving their coherence.

Obtained clean pulses were then subjected to parabolic pre-shaping followed by amplification and compression down to femtosecond duration. Note that the latter compression stage again required a standard free-space compressor based on a diffraction grating, compromising the all-fiber configuration. Thus, the output characteristic of such a laser source was analogue to those that can be obtained by the aforementioned amplified mode-locked fiber oscillator. In addition to its use as a pulse compressor or a pulse regenerator, Mamyshev regeneration has also been demonstrated experimentally as a mode-locking mechanism under various cavity schemes [M. Olivier, V. Boulanger, F. Guilbert-Savary, P. Sidorenko, F. W. Wise, and M. Piche, "Femtosecond fiber Mamyshev oscillator at 1550nm ", Opt. Lett. 44, 851-854 (2019), Z. Liu, Z. Ziegler, L. G. Wright, and F. W. Wise, "Megawatt peak power from a Mamyshev regenerator" Optica 4, 649 (2017), B. Pielach, J. Szczepanek, T. M. Kardas, and Y. Stepanenko, "Mamyshev oscillator with a widely tunable repetition rate", J. of Lightwave technology 39, 574-581 (2021)].

From the US patent application US 6141129 A a Mamyshev regenerator is known which is an all-optical regenerator originally used in optical communications for single-channel optical pulse reshaping and re-amplification. It relies on using the SPM in a nonlinear medium to provide a spectral broadening of the pulses and then on subsequent filtering of the broadened pulses with a filter in which the center frequency is shifted from the center frequency of the input pulse of the broadened pulses.

From the US patent application US 2023223729 A1 a mode-lockable ring oscillator is known, which includes a gain element for amplifying an optical pulse into an amplified pulse, a nonlinear optical element for broadening the amplified pulse into a first spectrally-broadened pulse, a first optical filter for filtering the first spectrally-broadened pulse into a first filtered pulse, a passive nonlinear optical element for broadening the first filtered pulse into a second spectrally-broadened pulse, and a second optical filter for filtering the second spectrally-broadened pulse into a second filtered pulse. The first and second optical filters have passbands that partially overlap such that the ring cavity can emit continuous-waves (CW). With these spectrally overlapping passbands, the mode-lockable ring oscillator can directly initiate single-pulse mode-locking by modulating pump power that pumps the gain element. After this modulation has stopped, the mode-lockable ring oscillator maintains this single-pulse mode-locking while the passbands remain spectrally overlapped.

### Technical problem - a purpose of the invention

No system or method is known in state of the art, which allows for effective spectral broadening of chirped laser pulses while shortening them down to a subpicosecond duration. Due to technical reasons, the next requirement is that the system and method are based on an all-fiber configuration.

### Summary of the invention

According to one aspect of the present invention, there is provided a system for spectral broadening of chirped laser pulses characterized in that the system comprises a fiber-based source, a fiber-based spectral filter and a fiber-based amplifier, wherein:

- said fiber-based components of the system are optically connected by optical fibers,

- the source is configured for creating the chirped laser pulses and for sending them through the optical fiber to the spectral filter,

- the spectral filter is configured for receiving the chirped laser pulses from the source through the optical fiber, for shortening them down to a duration below 1,5 ps and for sending them through the optical fiber to the amplifier,

- the amplifier is configured for receiving the filtered chirped laser pulses from the spectral filter through the optical fiber, for amplifying them and spectrally broadening them in an optical fiber inside the fiber-based amplifier via nonlinear effects and for sending them out.

In one embodiment the source is an ultrafast fiber oscillator containing a gain medium in the form of a rare-earth-doped optical fiber, preferably doped with ytterbium and/or neodymium and/or erbium, thulium, holmium, praseodymium ions.

In a preferred embodiment the amplifier contains a gain medium in the form of a rare-earth-doped optical fiber, preferably doped with ytterbium and/or neodymium and/or erbium, thulium, holmium, praseodymium ions.

Preferably all the optical fibers and fiber-based components are polarization maintaining (PM).

Preferably the optical fiber inside the fiber-based amplifier used for spectral broadening of the filtered chirped laser pulses is a standard single mode, step-index, solid core fiber exhibiting normal dispersion around the central wavelength of the source.

In yet another embodiment, the optical fiber inside the fiber-based amplifier used for spectral broadening of the filtered chirped laser pulses is a photonic crystal fiber (PCF) with tailored dispersion properties to be pumped in a weakly normal dispersion regime or featuring relatively low all-normal dispersion in the spectral range of interest.

Preferably the spectral filter is wavelength-tunable in the spectral range of the source and has tunable spectral bandwidth adjusted for obtaining the filtered chirped laser pulse duration below 1,5 ps.

Preferably the spectral filter has a Gaussian transmission profile.

Preferably the spectral filter is placed any position between the source oscillator and gain fiber of the amplifier.

According to another aspect of the present invention, there is provided a method for spectral broadening of chirped laser pulses characterized in that it is conducted in the system according to the invention, wherein the chirped laser pulses are created in a fiber-based source, then the chirped laser pulses are shortened down to a duration below 1,5 ps in the fiber-based spectral filter and next the filtered chirped laser pulses are amplified and spectrally broadened in the fiber-based amplifier via nonlinear effects.

Preferably the nonlinear effect used for spectral broadening of the filtered chirped laser pulses in the fiber-based amplifier is self-phase modulation (SPM).

Preferably a chirp of the source and a bandwidth of the filter are selected and adjusted to each other such that the filtered laser pulse duration below 1,5 ps is obtained.

Preferably the chirped laser pulses created in the source are Gaussian pulses with a full width at half maximum (FWHM) of $\Delta\lambda$ and chirp of $\beta_2$, and the bandwidth of the filter has FWHM $\Delta\lambda_f$ fulfilling the condition:

$$\Delta\lambda_f \leq \frac{\Delta\lambda\Delta\lambda'}{\sqrt{(\Delta\lambda + \Delta\lambda')(\Delta\lambda - \Delta\lambda')}}$$

where

$$\Delta\lambda' = \frac{\lambda^2\sqrt{2}}{4\pi c\beta_2}\sqrt{\Delta t^2 - \sqrt{\Delta t^4 - 64\beta_2^2 \log^2 2}}$$

and $\Delta t$ < 1,5 ps is a final pulse duration.

According to the invention, the system is similar to systems known in state of the art, although the solutions known in state of the art are used for the generation of laser pulses. According to the invention, the system is used for shortening in time and spectral broadening of chirped laser pulses. The effect of the system and method according to the invention is surprising for a person skilled in the art, while it turned out that by spectral filtering of the picosecond chirped pulses with their subsequent amplification, it is possible to achieve a broad supercontinuum due to SPM in nonlinear optical fibers. Moreover, the presented solution is an all-fiber configuration and does not need any free-space optics.

### Brief description of Drawings

A system for spectral broadening of chirped laser pulses according to the invention is illustrated in the drawing, where Fig. 1 presents a functional scheme of the system according to the first embodiment, Fig. 2 presents a functional scheme of the system according to a second embodiment, Fig. 3 presents an experimental optical output spectrum of a chirped laser pulse created by the system according to the second embodiment, Fig. 4 presents an autocorrelation function of the output pulses and Fig. 5 presents SPM-based supercontinuum output beam.

### Detailed description of preferred embodiments

A system for spectral broadening of chirped laser pulses, according to the invention in the first embodiment contains a fiber-based source 1 of the chirped laser pulses, a fiber-based spectral filter 2 and a fiber-based amplifier 3. The source 1 of the chirped laser pulses is an ultrafast fiber oscillator containing a gain medium in the form of a rare-earth-doped optical fiber. Gain media of the source 1 ultrafast fiber oscillator and fiber-based amplifier 3 are in the form of a fiber doped with ytterbium and neodymium and erbium, thulium, holmium, praseodymium ions. The optical fiber inside the fiber-based amplifier 3 used for spectral broadening is a standard single mode, step-index, solid core fiber exhibiting normal dispersion around the central wavelength of the source 1. The components 1, 2, 3 are connected between each other by the optical fibers 4. All optical fibers 4 and fiber-based components 1, 2, 3 are polarization maintaining (PM). The chirped laser pulses are created in the source 1, shortened down to a duration below 1,5 ps by the spectral filter 2, amplified and spectrally broadened in the fiber-based amplifier 3 via nonlinear effects. The nonlinear effect used for spectral broadening of the chirped laser pulse in the fiber-based amplifier 3 is self-phase modulation (SPM). The spectral filter 2 is wavelength-tunable in the spectral range of the pump beam and has tunable spectral bandwidth such that the filtered chirped laser pulse duration is below 1,5 ps.

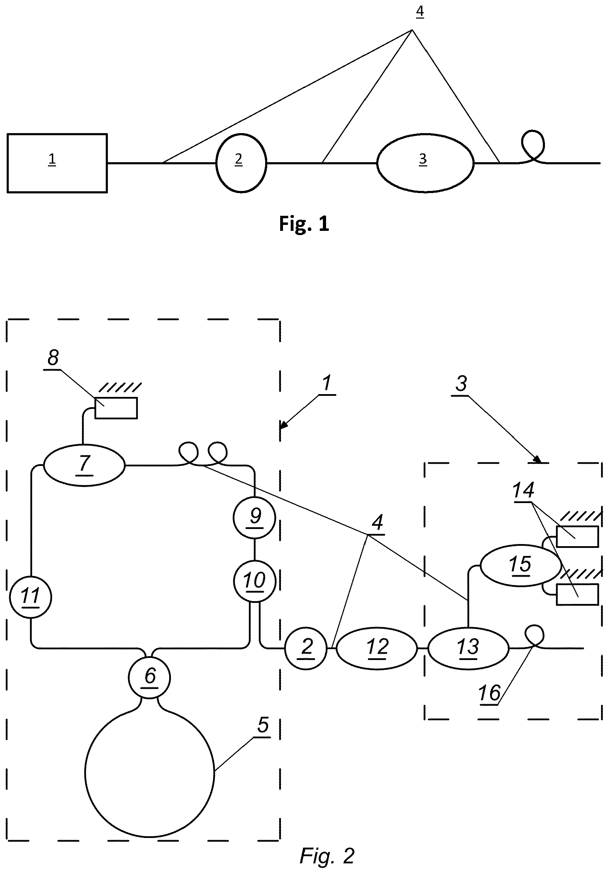

A system for spectral broadening of chirped laser pulses, according to the invention in the second embodiment, follows in general the structure presented in Fig. 1, while in more details it contains a fiber-based source 1 of the chirped laser pulses, a fiber-based spectral filter 2 and a fiber-based amplifier 3. The components 1, 2, 3 are connected to each other by the optical fibers 4. All optical fibers 4 and fiber-based components 1, 2, 3 are polarization maintaining (PM). The source 1 of the chirped laser pulses is an ultrafast fiber oscillator containing a gain medium in the form of a rare-earth-doped optical fiber. The ultrafast ytterbium-doped fiber oscillator source 1 delivers 12,6 ps chirped pulses at 1030 nm central wavelength with 17,74 MHz repetition rate. The source 1 oscillator operates in a dissipative soliton regime with a total accumulated dispersion of 0,27 $ps^2$ (at 1030 nm). The source 1 oscillator is mode-locked through a 4,4 m-long nonlinear-loop-mirror 5 (NOLM) based on a 20/80 fiber coupler 6. The cavity of the source 1 oscillator is composed of single-mode, all-PM fibers and fiber components including a 0,6 m-long segment of ytterbium-doped PM fiber (Nufern PM-YSF-HI) forward-pumped via first wavelength-division multiplexer 7 (WDM) by a 976 nm continuous wave diode 8, a polarization-sensitive optical isolator 9 to ensure the unidirectional light propagation, 40/60 output fiber coupler 10 (OC) and an 8-nm-wide bandpass filter 11 at 1030 nm with a Gaussian profile for spectral filtering. As a passive fiber, a PM980 fiber is used. The output beam from the source 1 oscillator is spectrally filtered by splicing the source 1 oscillator output fiber to the 2 nm-wide bandpass spectral filter 2 at 1030 nm central wavelength. The beam is amplified up to 0,8 W average power by further splicing through the fiber isolator 12 to the amplifier 3 composed of a 0,9 m-long ytterbium-doped fiber (Nufern PM-YSF-HI) pumped through a second wavelength division multiplexer 13 (WDM) using two laser diodes 14 (LD) with a central wavelength of 976 nm operating in a continuous wave mode that were polarization combined by means of a polarization beam combiner 15 (PBC). The output end of ytterbium-doped fiber is spliced to the 1 m-long photonic crystal fiber 16 (PCF) with tailored dispersion properties to be pumped in a weakly normal dispersion regime or featuring relatively low all-normal dispersion in the spectral range of interest (NKT LMA-PM-5). The chirped laser pulses are created in the source 1, shortened down to a duration below 1,5 ps by the spectral filter 2, amplified in the fiber-based amplifier 3 and spectrally broadened in PCF 16 via nonlinear effect, which is self-phase modulation (SPM).

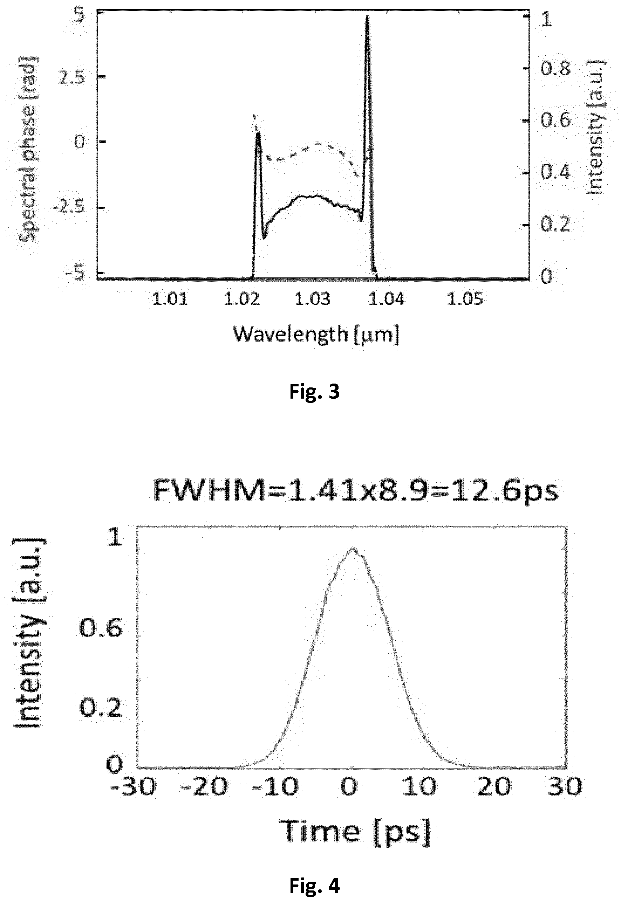

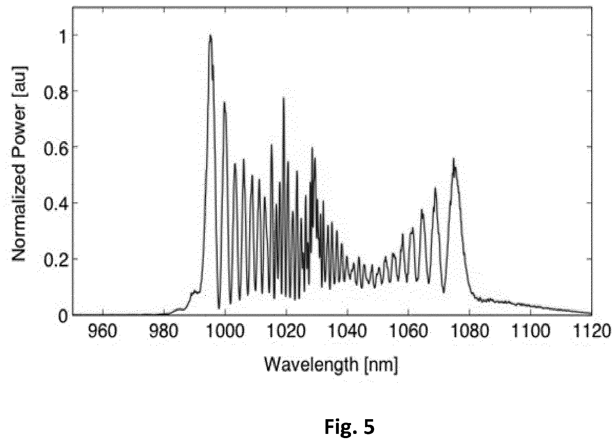

An experimental optical spectrum of the chirped laser pulse created by the system according to the second embodiment, as presented in Fig.3 (continuous line), is characterized by a central wavelength of 1030 nm with a full width at half maximum of ~15 nm. A dashed curve shows the spectral phase of the pulse, retrieved by the SPIDER method. An autocorrelation function of an output chirped pulse is illustrated in Fig.4 and has a duration of 8.9 ps. SPM-based supercontinuum output beam is presented in Fig.5 for the average power of 0.8W at the input of PCF 16.

A method of spectral broadening of chirped laser pulses, according to the invention in the first execution example, utilizes the system according to the first embodiment. A chirped laser pulse is created in a fiber-based source 1 in a first step, then in a second step the chirped laser pulse is shortened down to a duration below 1,5 ps in a fiber-based spectral filter 2 and next in a third step the filtered chirped laser pulse is amplified and spectrally broadened in a fiber-based amplifier 3 via nonlinear effects. The nonlinear effect used for spectral broadening of the filtered chirped laser pulse in the third step in the fiber-based amplifier 3 is self-phase modulation (SPM). A chirp of the source 1 in the first step and a bandwidth of the filter 2 in the second step are selected such that the filtered pulse duration is below 1,5 ps. The chirped laser pulse created is a Gaussian pulse with a full width at half maximum (FWHM) of $\Delta\lambda$ and chirp of $\beta_2$, and the bandwidth of the filter (2) has FWHM $\Delta\lambda_f$ which fulfils the condition:

$$\Delta\lambda_f \leq \frac{\Delta\lambda\Delta\lambda'}{\sqrt{(\Delta\lambda + \Delta\lambda')(\Delta\lambda - \Delta\lambda')}}$$

where

$$\Delta\lambda' = \frac{\lambda^2\sqrt{2}}{4\pi c\beta_2}\sqrt{\Delta t^2 - \sqrt{\Delta t^4 - 64\beta_2^2 \log^2 2}}$$

and $\Delta t < 1,5$ ps is a final pulse duration.

**Claims**

1.   A system for spectral broadening of chirped laser pulses **characterized in that** the system comprises a fiber-based source (1), a fiber-based spectral filter (2) and a fiber-based amplifier (3), wherein:

- said fiber-based components (1, 2, 3) of the system are optically connected by optical fibers (4),
- the source (1) is configured for creating the chirped laser pulses and for sending them through the optical fiber (4) to the spectral filter (2),
- the spectral filter (2) is configured for receiving the chirped laser pulses from the source (1) through the optical fiber (4), for shortening them down to a duration below 1,5 ps and for sending them through the optical fiber (4) to the amplifier (3),
- the amplifier (3) is configured for receiving the filtered chirped laser pulses from the spectral filter (2) through the optical fiber (4), for amplifying them and spectrally broadening them in an optical fiber inside the fiber-based amplifier (3) via nonlinear effects and for sending them out.

2. The system according to claim 1, **wherein** the source (1) is an ultrafast fiber oscillator containing a gain medium in the form of a rare-earth-doped optical fiber, preferably doped with ytterbium and/or neodymium and/or erbium, thulium, holmium, praseodymium ions.

3. The system according to claim 1 or 2, **wherein** the amplifier (3) contains a gain medium in the form of a rare-earth-doped optical fiber, preferably doped with ytterbium and/or neodymium and/or erbium, thulium, holmium, praseodymium ions.

4. The system according to any one of claims from 1 to 3, **wherein** all the optical fibers (4) and fiber-based components (1, 2, 3) are polarization maintaining (PM).

5. The system according to any one of claims from 1 to 4, **wherein** the optical fiber inside the fiber-based amplifier (3) used for spectral broadening of the filtered chirped laser pulses is a standard single mode, step-index, solid core fiber exhibiting normal dispersion around the central wavelength of the source (1).

6. The system according to any one of claims from 1 to 4, **wherein** the optical fiber inside the fiber-based amplifier (3) used for spectral broadening of the filtered chirped laser pulses is a photonic crystal fiber (PCF) with tailored dispersion properties to be pumped in a weakly normal dispersion regime or featuring relatively low all-normal dispersion in the spectral range of interest.

7. The system according to any one of claims from 1 to 6, **wherein** the spectral filter (2) is wavelength-tunable in the spectral range of the source (1) and has tunable spectral bandwidth adjusted for obtaining the filtered chirped laser pulse duration below 1,5 ps.

8. The system according to any one of claims from 1 to 7, **wherein** the spectral filter (2) has a Gaussian transmission profile.

9. The system according to any one of claims from 1 to 8, **wherein** the spectral filter (2) is placed any position between the source (1) oscillator and gain fiber of the amplifier (3).

10. A method for spectral broadening of chirped laser pulses **characterized in that** it is conducted in the system according to any one of claims from 1 to 9, wherein the chirped laser pulses are created in a fiber-based source (1), then the chirped laser pulses are shortened down to a duration below 1,5 ps in the fiber-based spectral filter (2) and next the filtered chirped laser pulses are amplified and spectrally broadened in the fiber-based amplifier (3) via nonlinear effects.

11. The method according to claim 10, **wherein** the nonlinear effect used for spectral broadening of the filtered chirped laser pulses in the fiber-based amplifier (3) is self-phase modulation (SPM).

12. The method according to claim 10 or 11, **wherein** a chirp of the source (1) and a bandwidth of the filter (2) are selected and adjusted to each other such that the filtered laser pulse duration below 1,5 ps is obtained.

13. The method according to claim 12, **wherein** the chirped laser pulses created in the source (1) are Gaussian pulses with a full width at half maximum (FWHM) of $\Delta\lambda$ and chirp of $\beta_2$, and the bandwidth of the filter (2) has FWHM $\Delta\lambda_f$ fulfilling the condition:

$$\Delta\lambda_f \leq \frac{\Delta\lambda\Delta\lambda'}{\sqrt{(\Delta\lambda + \Delta\lambda')(\Delta\lambda - \Delta\lambda')}}$$

where

$$\Delta\lambda' = \frac{\lambda^2\sqrt{2}}{4\pi c\beta_2}\sqrt{\Delta t^2 - \sqrt{\Delta t^4 - 64\beta_2^2\log^2 2}}$$

and $\Delta t < 1{,}5$ ps is a final pulse duration.

**Fig. 1**

*Fig. 2*

**Fig. 3**

**Fig. 4**

**Fig. 5**

Europäisches
Patentamt

European
Patent Office

Office européen
des brevets

# EUROPEAN SEARCH REPORT

**Application Number**

EP 24 17 3411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FU WALTER ET AL: "High-power femtosecond pulses without a modelocked laser", OPTICA, vol. 4, no. 7, 20 July 2017 (2017-07-20), pages 831-834, XP055946043, DOI: 10.1364/OPTICA.4.000831 | 1-5,7-12 | INV.<br>G02F1/35<br>G02F1/365<br>H01S3/00<br>H01S3/067<br>H01S3/16 |
| Y | * the whole document * | 6 | |
| A | | 13 | |
| | ----- | | |
| X | NÄRHI MIKKO ET AL: "Optimization of Mamyshev regenerator for ultrafast pulse generation", PROCEEDINGS OF THE SPIE, SPIE, US, vol. 11665, 5 March 2021 (2021-03-05), pages 1166518-1166518, XP060141042, ISSN: 0277-786X, DOI: 10.1117/12.2576869 ISBN: 978-1-5106-5738-0 * the whole document * | 1,4,8-12 | |
| | ----- | | |
| Y | SZCZEPANEK JAN ET AL: "Simple all-PM-fiber laser system seeded by an all-normal-dispersion oscillator mode-locked with a nonlinear optical loop mirror", PROCEEDINGS OF SPIE; [PROCEEDINGS OF SPIE ISSN 0277-786X VOLUME 10524], SPIE, US, vol. 9728, 11 March 2016 (2016-03-11), pages 972827-972827, XP060067456, DOI: 10.1117/12.2218280 ISBN: 978-1-5106-1533-5 * the whole document * | 6 | **TECHNICAL FIELDS SEARCHED (IPC)**<br><br>G02F<br>H01S |
| | ----- | | |
| | -/-- | | |

The present search report has been drawn up for all claims

| Place of search | Date of completion of the search | Examiner |
|---|---|---|
| The Hague | 9 October 2024 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 17 3411

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PIELACH MATEUSZ ET AL: "12 nJ, 250 fs pulses from an all-PM-fiber laser oscillator", PROCEEDINGS OF THE SPIE, SPIE, US, vol. 11665, 5 March 2021 (2021-03-05), pages 1166515-1166515, XP060141034, ISSN: 0277-786X, DOI: 10.1117/12.2581702 ISBN: 978-1-5106-5738-0 * the whole document * | 1-13 | |

-----

**TECHNICAL FIELDS SEARCHED (IPC)**

The present search report has been drawn up for all claims

| Place of search | Date of completion of the search | Examiner |
|---|---|---|
| The Hague | 9 October 2024 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6141129 A
- US 2023223729 A1

**Non-patent literature cited in the description**

- **LABRUYÈRE** ; **A. TONELLO** ; **V. COUDERC** ; **G. HUSS** ; **P. LEPROUX**. Compact supercontinuum sources and their biomedical applications. *Opt. Fiber Technol.*, 2012, vol. 18, 375-378
- **C. POUDEL** ; **C. F. KAMINSKI,**. upercontinuum radiation in fluorescence microscopy and biomedical imaging applications. *J. Opt. Soc. Am. B*, 2019, vol. 36, A139-153
- **J. M. DUDLEY** ; **G. GENTY** ; **S. COEN**. Supercontinuum generation on photonic crystal fiber. *Rev. of Modern Physics*, 2006, vol. 78, 1135-1184
- **T. SYLVESTRE et al.** Recent advances in supercontinuum generation in specialty optical fibers. *JOSAB*, 2021, vol. 38,, F90-F103
- **C. FINOT** ; **B. KIBLER** ; **L. PROVOST** ; **S. WABNITZ**. Beneficial impact of wave-breaking for coherent continuum formation in normally dispersive nonlinear fibers. *J. Opt. Soc. Am. B*, 2008, vol. 25, 1938
- **A. M. HEIDT,** ; **J. S. FEEHAN** ; **J. H. V. PRICE** ; **T. FEURER,**. Limits of coherent supercontinuum generation in normal dispersion fibers. *J. Opt. Soc. Am. B*, 2017, vol. 34, 764
- **E. GENIER** ; **S. GRELET** ; **R. D. ENGELSHOLM** ; **P. BOWEN,** ; **P. M. MOSELUND** ; **O. BANG** ; **J. M. DUDLEY** ; **T. SYLVESTRE**. Ultra-flat, low-noise, and linearly polarized fiber supercontinuum source covering 670-1390 nm. *Opt. Lett.*, 2021, vol. 46, 1820-1823
- **H-Y CHUNG** ; **W. LIU** ; **Q. CAO** ; **L. SONG,** ; **F. X. KARTNER** ; **G. CHANG**. Megawatt peak power tunable femtosecond source based on self-phase modulation enable spectral selection. *Opt. Express*, 2018, vol. 26, 3684
- **W. HÄNSEL** ; **H. HOOGLAND** ; **M. GIUNTA** ; **S. SCHMID** ; **T. STEINMETZ** ; **R. DOUBEK** ; **P. MAYER** ; **S. DOBNER** ; **C. CLEFF,** ; **M. FISCHER**. All polarization-maintaining fiber laser architecture for robust femtosecond pulse generation. *Applied Physics B*, 2016, vol. 123, 11
- **X. SHEN** ; **W. LI** ; **H. ZENG**. Polarized dissipative solitons in all-polarization-maintained fiber laser with long-term stable self-started mode-locking.. *Applied Physics Letters*, September 2014, vol. 105, 101109-101109
- **W. FU,** ; **L. G. WRIGHT** ; **F. W. WISE**. High-power femtosecond pulses without a modelocked laser. *Optica*, 2017, vol. 4, 831-834
- **M. OLIVIER** ; **V. BOULANGER** ; **F. GUILBERT-SAVARY** ; **P. SIDORENKO** ; **F. W. WISE** ; **M. PICHE**. Femtosecond fiber Mamyshev oscillator at 1550nm. *Opt. Lett.*, 2019, vol. 44, 851-854
- **Z. LIU** ; **Z. ZIEGLER,** ; **L. G. WRIGHT** ; **F. W. WISE**. Megawatt peak power from a Mamyshev regenerator. *Optica*, 2017, vol. 4, 649
- **B. PIELACH** ; **J. SZCZEPANEK** ; **T. M. KARDAS** ; **Y. STEPANENKO**. Mamyshev oscillator with a widely tunable repetition rate. *J. of Lightwave technology*, 2021, vol. 39, 574-581